# EUROPÄISCHE PATENTSCHRIFT

(11) **EP 2 986 825 B1**
(45) Veröffentlichungstag und Bekanntmachung des Hinweises auf die Patenterteilung: **28.06.2017**
(21) Anmeldenummer: 14708005.5
(22) Anmeldetag: 04.03.2014
(51) Int. Cl.: F25B 27/00, F28D 20/00, F01K 9/00, F01K 3/00, F01K 3/06

(54) **ENERGIESPEICHERANORDNUNG ZUR FLEXIBILISIERUNG VON KRAFTWERKEN**
ENERGY STORAGE ARRANGEMENT FOR INCREASING THE FLEXIBILITY OF POWER PLANTS
ENSEMBLE ACCUMULATEUR D'ÉNERGIE SERVANT À RENDRE FLEXIBLES DES CENTRALES ÉLECTRIQUES

(30) Priorität: 24.05.2013 DE 102013209680
(43) Veröffentlichungstag der Anmeldung: 24.02.2016
(73) Patentinhaber: Siemens Aktiengesellschaft, 80333 München (DE)
(72) Erfinder: LENK, Uwe, 08064 Zwickau (DE); REISSNER, Florian, 90475 Nürnberg (DE); SCHÄFER, Jochen, 90408 Nürnberg (DE); TREMEL, Alexander, 91052 Erlangen (DE)
(86) Internationale Anmeldenummer: PCT/EP2014/054122
(87) Internationale Veröffentlichungsnummer: WO 2014/187585

(56) Entgegenhaltungen:
- EP-A1- 2 589 760
- WO-A2-2009/064378
- US-A1- 2009 121 495

## Beschreibung

Die vorliegende Erfindung betrifft Energieumwandlungs- und -speichersysteme zum Ausgleich von Volllast- und Teillastzeiten von Kraftwerken.

Zwar ist das Bestreben groß, konventionelle Verbrennungs-Kraftwerke aufgrund des zu hohen CO₂-Ausstoßes und der dadurch bedingten Klimabelastung sowie auch Kernkraftwerke aufgrund ihrer diversen Risiken durch erneuerbare Energien zu ersetzen, um zukünftig eine sicherere umweltfreundlichere elektrische Stromversorgung zu gewährleisten. Dennoch bleibt die Gewährleistung einer vor allem unabhängigen Stromversorgung rein auf Basis erneuerbarer Energien bislang eine Herausforderung. Die konventionelle elektrische Stromerzeugung durch beispielsweise Verbrennungs- und Kernkraftwerke liegt zumindest in Deutschland noch über 50% des Anteils der Stromerzeugung.

Um neben einer zuverlässigen unabhängigen Stromerzeugung dennoch erneuerbare Energien wie beispielsweise aus Biomasse, Photovoltaik oder Windenergie auszubauen, müssen diese sehr unterschiedlichen Formen der Energieerzeugung parallel in die Stromnetze einspeisen. Gerade aber Sonnen- und Windstrom hat den großen Nachteil, nur ein stark fluktuierendes Stromangebot an das Stromnetz zur Verfügung stellen zu können. Strom kann bisher nur in sehr geringem Ausmaß gespeichert werden, was beispielsweise in Batterien oder Pumpspeicherkraftwerken oder mittels Schwungrädern passiert. Je nach geografischer Voraussetzung werden potenzielle Energiespeicher wie beispielsweise Pumpspeicherkraftwerke, z.B. in Norwegen eingesetzt, welche jedoch in den meisten anderen Ländern zumindest in naher Zukunft keine volkswirtschaftlich interessante Lösung bieten, zudem auch die Speichermenge begrenzt ist.

Zur flexibleren Strombereitstellung an Stromnetze sind bisher beispielsweise Kraftwerke mit Gasturbinen oder auch Gas- und Dampfkraftwerke (GuD) bekannt und werden dort eingesetzt, da sie relativ schnell ihre Leistung hoch und runter regeln können. Die Anzahl dieser Kraftwerke ist jedoch noch sehr gering. Außerdem wird durch die Verbrennung von Erdgas das Klima weiter belastet und es besteht zusätzlich eine Abhängigkeit von Gaslieferungen aus anderen Ländern. Außerdem ist es fraglich, inwiefern Stillstand- und Teillastzeiten dieser Kraftwerke noch wirtschaftlich sind.

Ein davon unterschiedlicher Ansatz sieht ein Lastmanagement auf der Verbraucherseite des Netzwerks vor, welches dazu ein intelligentes Stromnetzwerk (Smart Grid) sein muss. Der Ausbau derartiger intelligenter Stromnetze, so dass diese flächendeckend sind und ausreichend viele Teilnehmer erreichen wird jedoch nur einen Teil des Problems lösen bzw. auch an seine Grenzen stoßen.

Konventionelle Kraftwerke, die langfristig auf einen vorhersehbaren Strombedarf ausgerichtet sind, können nur sehr langsam und nur mit starken Verlusten verbunden von Volllast- in Teillastbereiche wechseln oder gar abgeschaltet werden. Je nach Kraftwerk würde dies mindestens mehrere Stunden bis hin zu mehreren Tagen dauern.

Daher ist es ein technisches Erfordernis, eine regelbare Strombereitstellung durch konventionelle Kraftwerke zu ermöglichen.

Lösungen aus dem Stand der Technik betreffen hierzu thermische Speicherlösungen, wie sie etwa aus der DE 26 15 439 A1, der DE 10 2008 050 244 A1, der FR 2 922608 A1, der US 2012/0047 891 A1 oder auch der US 2013/0118170A1 bekannt sind.

Nachteilig an diesen aus dem Stand der Technik bekannten Lösungen ist jedoch, dass die thermischen Speicher für eine effiziente Speicherung von Abwärme nicht geeignet bzw. vorgesehen sind. Insbesondere lehren die aus dem Stand der Technik bekannten Lösungen eine Energiespeicherung auf einem relativ hohen Temperaturniveau, wodurch auch relativ höhere Wärmeverluste und damit Effizienzeinbußen die Folge sind.

Die WO 2009/064378 A2 offenbart eine Anordnung mit einem Kraftwerk, einem thermischen Energiespeicher und einer Energieumwandlungsvorrichtung. Die Energieumwandlungsvorrichtung ist hierbei dazu ausgebildet, den thermischen Energiespeicher in einem Zeitintervall eines Stromüberangebotes zu beladen.

Weitere Anordnungen, die Kraftwerke mit Energiespeicher betreffen, sind aus der EP 2589760 A1 und der US 2009/121495 A1 bekannt.

Insofern ist es Aufgabe der vorliegenden Erfindung eine technische Speicherlösung vorzuschlagen, welche nicht nur eine thermische Energiespeicherung auf Niedertemperaturwärmeniveau erlaubt, sondern auch andernfalls nicht weiter genutzte Abwärme eines Kraftwerks sinnvoll nutzbar machen lässt.

Die Aufgabe ist durch eine Anordnung gemäß Patentanspruch 1 sowie durch ein Verfahren gemäß Patentanspruch 10 gelöst. Ausführungsformen der Erfindung sind Gegenstand der Unteransprüche.

Die erfindungsgemäße Anordnung zur Flexibilisierung von Kraftwerken umfasst ein Kraftwerk, wenigstens einen thermischen Energiespeicher und wenigstens eine Energieumwandlungsvorrichtung, welche ausgestaltet ist, den thermischen Energiespeicher in einem Zeitintervall eines Stromüberangebots zu beladen, wobei ein erster thermischer Speicher an einen Kondensator des Kraftwerks thermisch gekoppelt ist. Dies hat den Vorteil, dass ein überschüssiges Stromangebot nicht verloren geht, sondern gespeichert werden kann, bzw. birgt diese Lösung den Vorteil, dass um keinen überschüssigen Strom zu erzeugen, das Kraftwerk nicht unnötig aufwendig in eine Teillast gefahren werden muss oder sogar abgeschaltet werden muss.

Die Kopplung des thermischen Speichers an einen Kondensator des Kraftwerks eröffnet die Möglichkeit, thermische Energie abzugeben, wodurch sich der Kühlbedarf im Kondensator des Kraftwerks verringert. Gleichzeitig erlaubt diese Kopplung eine thermische Speicherung von andernfalls nicht weiter genutzter Abwärme auf Niedertemperaturniveau.

Entsprechend einer weiteren bevorzugten Ausführungsform ist vorgesehen, dass der thermische Speicher so an den Kondensator des Kraftwerks gekoppelt ist, dass er von diesem mit Wärme beladen werden kann.

In einer vorteilhaften Ausführungsform der Erfindung umfasst die Anordnung eine Regeleinrichtung für die Strombereitstellung an ein Stromnetz, wobei die Regeleinrichtung ausgestaltet ist, das Stromangebot durch das Kraftwerk mittels dem Beladen des thermischen Energiespeichers auf den in diesem Zeitintervall anliegenden Strombedarf zu verringern, so dass die Strombereitstellung durch regenerative Energien an das Stromnetz vorrangig ist. Dies hat den Vorteil, dass selbst für sich genommen unflexible konventionelle Kraftwerke im Volllastbetrieb für ein ausgleichendes Regelverhalten innerhalb eines intelligenten Stromnetzes eingesetzt werden können. Die Kraftwerke können insbesondere Verbrennungskraftwerke sein, die bei einem konstanten Volllastbetrieb, ohne den Brennstoffmassenstrom zu verringern, am effizientesten arbeiten und gleichzeitig kann der Einsatz und Ausbau erneuerbarer Energien erhöht werden.

Insbesondere ist dabei das Kraftwerk für konstanten Volllastbetrieb ausgelegt.

In einer weiteren vorteilhaften Ausgestaltung der Erfindung ist wenigstens ein thermischer Energiespeicher der Anordnung ein Wärmespeicher und wenigstens eine Energieumwandlungsvorrichtung ist eine Wärmepumpe wobei die Anordnung ausgestaltet ist den Wärmespeicher über ein Fernwärmenetz zu entladen.

In einer alternativen vorteilhaften Ausführungsform der Erfindung ist wenigstens ein thermischer Energiespeicher der Anordnung ein Kältespeicher und wenigstens eine Energieumwandlungsvorrichtung der Anordnung eine Kältemaschine, wobei die Anordnung ausgestaltet ist den Kältespeicher über ein Fernkältenetz zu entladen. Dies hat den Vorteil, dass der Wärme- oder Kältebedarf im Umkreis des Kraftwerkstandorts energieeffizient gedeckt werden kann.

Des Weiteren kann der erste thermische Speicher thermisch an einen Verdampfer einer Wärmepumpe und/oder an einen Kondensator einer Kältemaschine thermisch gekoppelt sein. So kann der thermische Speicher an den Verdampfer der Wärmepumpe Wärme abgeben oder sich von dem Kondensator der Kältemaschine zusätzlich mit Wärme beladen lassen. Besonders wenn der Verdampfer der Wärmepumpe so mit dem Kondensator des Kraftwerks verbunden ist, dass von dort thermische Energie nach der wenigstens einen Turbine des Kraftwerks abgeführt wird, verringert sich sehr vorteilhaft der Gesamtkühlbedarf des Kraftwerks vor allem der Kühlbedarf im Kondensator.

In einer weiteren vorteilhaften Ausgestaltung der Erfindung ist wenigstens eine Energieumwandlungsvorrichtung der Anordnung eine Wärmepumpe und ein zweiter thermischer Speicher ist thermisch an einen Kondensator der Wärmepumpe gekoppelt. Insbesondere ist er so an den Kondensator gekoppelt, dass er von diesem mit Wärme beladen werden kann. Dieser zweite thermische Energiespeicher kann besonders vorteilhaft für die Versorgung eines Fernwärmenetzes herangezogen werden, da durch die thermische Ankopplung an den Kondensator der Wärmepumpe eine höhere thermische Energie gespeichert werden kann.

Beispielsweise ist wenigstens eine Energieumwandlungsvorrichtung eine Kältemaschine deren Verdampfer thermisch an einen dritten thermischen Speicher gekoppelt ist, so dass dieser dritte thermische Speicher von dem Verdampfer der Kältemaschine kältebeladen wird und als Kältespeicher dient. Dieser Kältespeicher kann besonders vorteilhaft zur Kältebereitstellung in einem Fernkältenetz genutzt werden. Durch den thermischen Speicher kann das Kältenetz zeitlich versetzt betrieben werden.

Ebenso kann das Fernwärmenetz über den zweiten thermischen Speicher zeitlich versetzt betrieben werden beispielsweise ist es auch möglich einen Teilwärmestrom aus dem Kraftwerk direkt auszukoppeln und damit das Fernwärmenetz zu speisen, was der bisherigen Vorgehensweise bei der Kraft-Wärme-Kopplung entspräche, um eventuelle Spitzenlasten im Fernwärmenetz auszugleichen, wenn die Wärmepumpe aufgrund der Anforderungen des Stromnetzes und beispielsweise regenerativ bereitgestelltem Stromangebot nicht in Betrieb genommen werden sollte. Die Verbindung des Kondensators des Kraftwerks mit dem Verdampfer der Wärmepumpe ist besonders energieeffizient, da so die Abwärme des Kraftwerks für die Nutzung im Fernwärmenetz durch die Wärmepumpe auf ein viel höheres Temperaturniveau gebracht werden kann und gleichzeitig die Kühlleistung am Kondensator des Kraftwerks verringert wird. Damit wird im Kraftwerk der Einsatz von Wasser zur Kühlung und die elektrische Lüfterleistung verringert. Beispielsweise ist es auch denkbar die Abwärme von Kompressoren z. B. über Wasserkühlkreisläufe zum Beladen des zweiten thermischen Speichers zu nutzen.

Als thermische Speicher sind beispielsweise Wasserspeicher oder Phasenwechselmaterialspeicher geeignet.

Insbesondere kann das Kraftwerk mit einem Fernwärmenetz und gleichzeitig mit einem Fernkältenetz über je eine Wärmepumpe und eine Kältemaschine verbunden sein und beide thermischen Netze können über die jeweiligen thermischen Speicher zeitversetzt betrieben werden. In dieser Konstellation kann eine weitere Verbindung des Kondensators der Kältemaschine zum ersten thermischen Speicher, der mit dem Kondensator des Kraftwerks und dem Verdampfer der Wärmepumpe verbunden ist geschlossen werden und so die Abwärme der Kältemaschine zeitversetzt für den Verdampfer der Wärmepumpe herangezogen werden. Dies ist eine besonders vorteilhafte energieeffiziente Synergie dieser Anordnung mehrerer Komponenten.

Besonders vorteilhaft ist es einen Generator des Kraftwerks und einen Kompressor von wenigstens einer Energieumwandlungsvorrichtung der Anordnung auf dieselbe Welle zu koppeln. Alternativ können der Kompressor oder mehrere Kompressoren auch mittels indirekter Kraftübertragung z. B. über Riemen oder ganz ohne direkte Kraftübertragung z. B. über das Stromnetz betrieben werden. Die vorteilhafte Ausführung, Kompressoren und Generator bzw. Turbine des Kraftwerks auf eine gemeinsame Welle zu koppeln, vermindert jegliche Kraftübertragungsverluste. Das Hinzu- und Abkoppeln einer rotierenden Maschine im laufenden Betrieb ist bekannt und birgt keine neuen technischen Herausforderungen.

Somit können sowohl eine Kältemaschine als auch eine Wärmepumpe oder beides zugleich an der gleichen Welle wie der Generator des Kraftwerks betrieben werden. Beispielsweise kann bei der Kombination mit Kältemaschine als auch Wärmepumpe jeweils nur eine Energieumwandlungsvorrichtung davon betrieben werden und somit eine Umstellung beispielsweise von Winterauf Sommerbetrieb vorgenommen werden.

Als Kraftwerk in einer der beschriebenen Anordnungen kommen alle möglichen konventionellen Kraftwerke zur Stromerzeugung in Betracht, beispielsweise Atomkraftwerke, Kohlekraftwerke, Biomassekraftwerke, Gas- oder Ölverbrennungskraftwerke und andere. Das jeweilige eingesetzte Kraftwerk kann bei konstantem Brennstoffmassenstrom betrieben werden und dennoch durch die Anordnung mit der Wärmepumpe oder mit der Kältemaschine eine regelbare flexible elektrische Leistung bereitstellen. Somit sind diese Kraftwerke auch innerhalb intelligenter Stromnetze (Smart Grid) einsetzbar in denen der Einspeisung erneuerbarer Energien Vorrang gewährt werden kann.

Bei dem erfindungsgemäßen Verfahren zur regelbaren Strombereitstellung durch ein Kraftwerk, bei dem wenigstens ein thermischer Energiespeicher, der an einen Kondensator des Kraftwerks thermisch gekoppelt ist, und insbesondere gemäß den oben sowie unten beschriebenen Anordnungen ausgebildet ist, mittels einer Energieumwandlungsvorrichtung in einem Zeitintervall eines Stromüberangebots beladen wird, wird das Stromangebot an ein Stromnetz durch das Kraftwerk durch Beladen des wenigstens einen thermischen Speichers auf den in dem Zeitintervall anliegenden Strombedarf verringert, so dass die Strombereitstellung durch regenerative Energien an das Stromnetz vorrangig ist. Insbesondere läuft das Kraftwerk dabei in konstantem Volllastbetrieb. In einer Ausführungsform des Verfahrens wird ein Wärmespeicher als thermischer Energiespeicher verwendet, der über ein Fernwärmenetz entladen wird, insbesondere in einem Zeitintervall in dem kein Stromüberangebot vom Kraftwerk vorliegt. Alternativ oder zusätzlich wird ein Kältespeicher als thermischer Speicher verwendet, der über ein Fernkältenetz entladen wird, wiederum insbesondere in einem Zeitintervall, in dem kein Stromüberangebot vom Kraftwerk vorliegt. Bei dem Verfahren wird insbesondere wenigstens ein Wärmespeicher mittels einer Wärmepumpe und wenigstens ein Kältespeicher mittels einer Kältemaschine beladen. Diese Ausführungsform hat den Vorteil drei unterschiedliche Strombedarfsintervalle abzudecken. Die Abdeckung mehrerer unterschiedlicher Strombedarfsintervalle kann auch durch mehrere Wärmepumpen oder durch mehrere Kältemaschinen vorgenommen werden.

Ausführungsformen der vorliegenden Erfindung werden in exemplarischer Weise mit Bezug auf die Figuren 1 bis 3 der angehängten Zeichnung beschrieben:
- Figur 1: zeigt eine erfindungsgemäße Anordnung von Kraftwerk und thermischem Speicher kombiniert mit einer Wärmepumpe,
- Figur 2: zeigt eine Anordnung von Kraftwerk kombiniert mit einer Kältemaschine und
- Figur 3: zeigt eine erfindungsgemäße Anordnung von Kraftwerk, thermischen Speicher, Wärmepumpe und Kältemaschine.

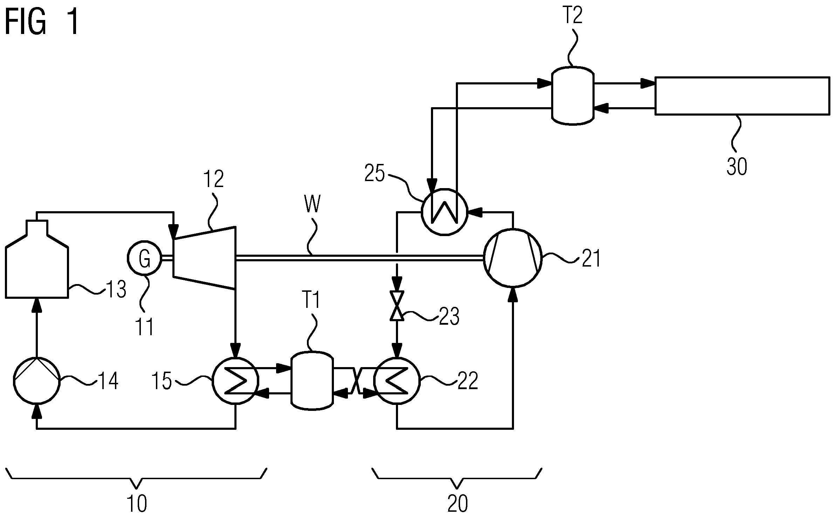

Die Figuren 1 bis 3 zeigen jeweils Fließdiagramme für einen Kraftwerksprozess mit dem Beladen und Entladen thermischer Energiespeicher T1 bis T3, dazu vorhandene Energieumwandlungsprozesse 20, 40 und an die Speicher T1 bis T3 angeschlossene Energieverbrauchernetze 30, 50. Jeweils links in der Figur ist der Kraftwerksprozess 10 gezeigt. Das Kraftwerk umfasst jeweils einen Generator 11, der von einer Turbine 12 angetrieben wird. Des Weiteren wird vom Kraftwerk ein Kondensator 15, eine Speisepumpe 14 sowie ein Dampferzeuger 13 umfasst. Alle drei Figuren zeigen den gängigsten Kraftwerkstyp 10 mit Dampfkreislauf. Es können jedoch auch Kraftwerke wie Gas- und Dampfkraftwerke oder ein Gasmotor entsprechend mit einer Kältemaschine 40 oder auch einer Wärmepumpe 20 gekoppelt werden. Dem Beispiel eines Gas- und Dampfkraftwerks entsprechend könnten dessen Luftkompressor, Gasturbine und Dampfturbine auf einer gemeinsamen Welle angeordnet sein.

In Figur 1 ist das Kraftwerk 10 mit einer Wärmepumpe 20 gekoppelt. Diese weist einen Kompressor 21, einen Verdampfer 22, ein Expansionsventil 23, sowie einen Kondensator 25 auf. Besonders vorteilhaft ist es zum Einen eine mechanische Kraftverbindung zwischen Kraftwerk 10 und Wärmepumpe 20 dadurch herzustellen, dass der Generator 11 bzw. die Turbine 12 des Kraftwerks 10 und der Kompressor 21 der Wärmepumpe 20 auf eine gemeinsame Welle W gekoppelt sind. Des Weiteren sind das Kraftwerk 10 und die Wärmepumpe 20 über den ersten thermischen Speicher T1, einen Wärmespeicher miteinander verbunden. Dieser wird mittels Abwärme des Kondensators 15 beladen und der Verdampfer 22 entzieht dem thermischen Speicher T1 die Wärme wieder. Der Kondensator 25 der Wärmepumpe 20 ist dazu mit einem zweiten thermischen Speicher T2, wiederum einem Wärmespeicher verbunden, der durch thermische Ankopplung an den Kondensator 25 der Wärmepumpe 20 auf einem wesentlich höheren Temperaturniveau beladen wird. Dieser ist besonders geeignet über ein Fernwärmenetz 30 entladen zu werden. Das Temperaturniveau des ersten thermischen Speichers T1 liegt beispielsweise zwischen 50°C und 90°C, das Temperaturniveau des zweiten thermischen Speichers T₂ liegt beispielsweise zwischen 80°C und 130°C.

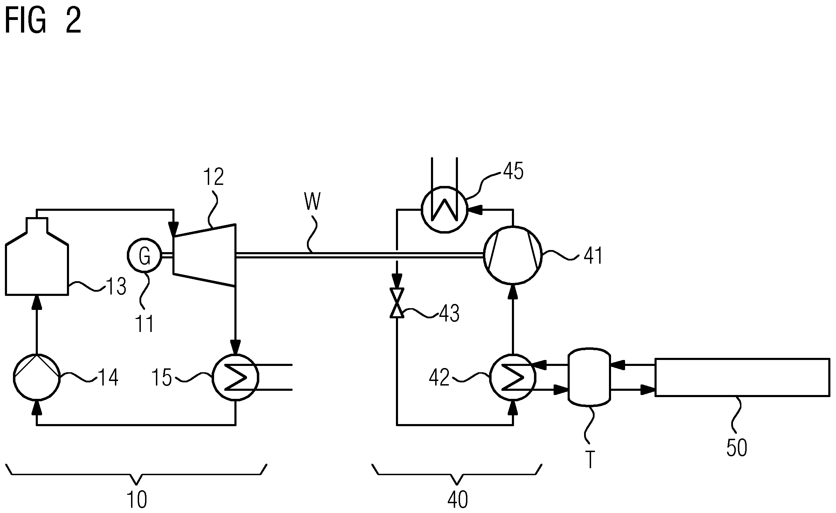

Die Figur 2 zeigt ein Beispiel für ein Dampfkraftwerk 10 mit einer Kältemaschine 40. Kraftwerk 10 und Kältemaschine 40 sind dabei wieder insbesondere über eine gemeinsame Welle W verbunden auf die der Generator 11 des Kraftwerks 10 sowie die Dampfturbine 12, genauso wie der Kompressor 41 der Kältemaschine 40 gekoppelt sind. Die Abkopplung und Hinzukopplung der rotierenden Maschinen geschieht im laufenden Betrieb zur Zu- bzw. Wegschaltung der Kältemaschine 40 an das Kraftwerk 10. Die Kältemaschine 40 umfasst weiterhin einen Verdampfer 42, ein Expansionsventil 43 sowie einen Kondensator 45. Vorteilhafterweise ist der Verdampfer 42 mit einem Kältespeicher T verbunden der auf einem Temperaturniveau beispielsweise zwischen -20°C und 15°C beladen wird und der seine Kälte über ein Fernkältenetz 50 abgeben kann. An den Kondensatoren 15, 45 der Kältemaschine 40 sowie des Kraftwerks 10 fällt auch wieder Abwärme an, auf einem Temperaturniveau zwischen 30°C und 90°C, mit der beispielsweise ein weiterer thermischer Speicher geladen werden kann.

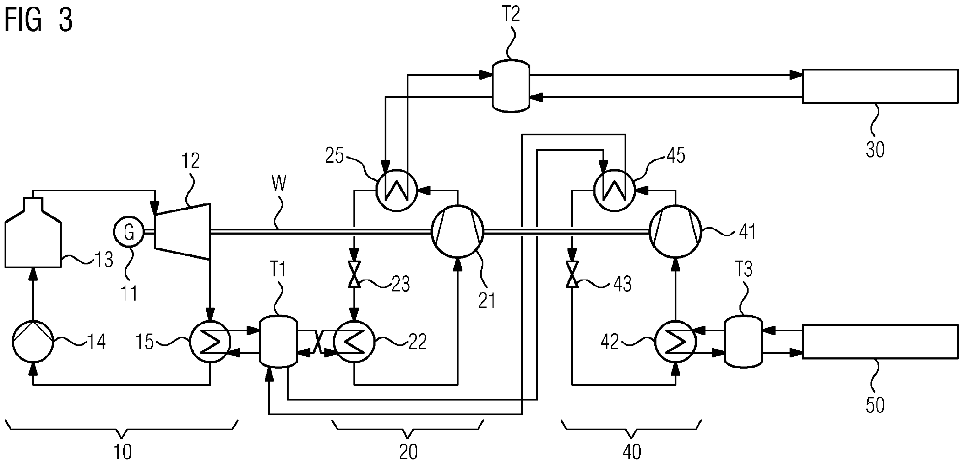

Gezeigt wird das Beladen eines thermischen Speichers T1 durch den Kondensator 15 des Kraftwerks 10 als auch durch den Kondensator 45 der Kältemaschine 40 in der Figur 3, in der das Kraftwerk 10 mit einer Wärmepumpe 20 und einer Kältemaschine 40 gekoppelt ist. Wärmebeladen werden in dieser Kombination ein erster Wärmespeicher T1 durch die Kondensatoren 15, 45 des Kraftwerks 10 und der Kältemaschine 40. Dieser erste Wärmespeicher T1 wird vorzugsweise zum Betrieb der Wärmepumpe 20 genutzt, indem er seine Wärme an den Verdampfer 22 abgibt. Der Kondensator 25 der Wärmepumpe 20, der Abwärme auf einem wesentlich höheren Temperaturniveau zur Verfügung stellt, belädt insbesondere einen zweiten Wärmespeicher T2, der zur Versorgung eines Fernwärmenetzes 30 zur Verfügung steht. Die gezeigte Kältemaschine 40 versorgt wieder ein Fernkältenetz 50, welches mittels des Kältespeicher T3 zeitversetzt betrieben werden kann. Besonders energieeffizient gelingt diese Kombination wenn die rotierenden Komponenten 11, 12, 21, 41 wieder alle auf einer gemeinsamen Welle W betrieben werden, da so jegliche Übertragungsverluste vermieden werden. In der Figur 3 ist gezeigt, dass Generator 11 und Dampfturbine 12 sowie die Kompressoren 21 und 41 der Wärmepumpe und Kältemaschine auf einer gemeinsamen Welle W angeordnet sind.

## Patentansprüche

1. Anordnung umfassend ein Kraftwerk (10), wenigstens einen thermischen Energiespeicher (T1, T2, T3) und wenigstens eine Energieumwandlungsvorrichtung (20, 40), welche ausgestaltet ist, den wenigstens einen thermischen Energiespeicher (T1, T2, T3) in einem Zeitintervall eines Stromüberangebots zu beladen,
**dadurch gekennzeichnet, dass**
ein erster (T1) der wenigstens einen thermischen Speicher (T1, T2, T3) thermisch an einen Kondensator (15) des Kraftwerks (10) gekoppelt ist.

2. Anordnung nach Anspruch 1 mit einer Regeleinrichtung für die Strombereitstellung an ein Stromnetz, wobei die Regeleinrichtung ausgestaltet ist, das Stromangebot durch das Kraftwerk (10), durch das Beladen des thermischen Energiespeichers (T1, T2, T3) auf den in diesem Zeitintervall anliegenden Strombedarf, zu verringern, so dass die Strombereitstellung durch regenerative Energien an das Stromnetz vorrangig ist.

3. Anordnung nach Anspruch 1 oder 2, wobei das Kraftwerk (10) für konstanten Volllastbetrieb ausgelegt ist.

4. Anordnung nach einem der Ansprüche 1 bis 3, wobei wenigstens ein der wenigsten einen thermischen Energiespeicher ein Wärmespeicher (T1, T2) und wenigstens eine Energieumwandlungsvorrichtung eine Wärmepumpe (20) ist und wobei die Anordnung ausgestaltet ist den Wärmespeicher (T1, T2) über ein Fernwärmenetz (30) zu entladen.

5. Anordnung nach einem der Ansprüche 1 bis 3, wobei wenigstens ein der wenigstens einen thermischen Energiespeicher ein Kältespeicher (T, T3) und wenigstens eine Energieumwandlungsvorrichtung eine Kältemaschine (40) ist und wobei die Anordnung ausgestaltet ist den Kältespeicher (T, T3) über ein Fernkältenetz (50) zu entladen.

6. Anordnung nach Anspruch 1, wobei der erste thermische Speicher (T1) weiterhin thermisch an einen Verdampfer (22) einer Wärmepumpe(20) und/oder an einen Kondensator (45) einer Kältemaschine (40) gekoppelt ist.

7. Anordnung nach Anspruch 1, wobei wenigstens eine Energieumwandlungsvorrichtung eine Wärmepumpe (20) ist und wobei ein zweiter der wenigstens einen thermischen Speicher (T2) an einen Kondensator (25) der Wärmepumpe (20) thermisch gekoppelt ist.

8. Anordnung nach Anspruch 1, wobei wenigstens eine Energieumwandlungsvorrichtung eine Kältemaschine (40) ist und wobei ein dritter der wenigstens einen thermischen Speicher (T3) an einen Verdampfer (42) der Kältemaschine (40) thermisch gekoppelt ist.

9. Anordnung nach einem der vorstehenden Ansprüche, wobei ein Generator (11) des Kraftwerks (10) und ein Kompressor (21, 41) wenigstens einer Energieumwandlungsvorrichtung (20, 40) auf dieselbe Welle (W) gekuppelt sind.

10. Verfahren zur regelbaren Strombereitstellung durch ein Kraftwerk (10) bei dem wenigstens ein thermischer Speicher (T1), der an einen Kondensator (15) des Kraftwerks (10) thermisch gekoppelt ist, mittels einer Energieumwandlungsvorrichtung (20, 40) in einem Zeitintervall eines Stromüberangebots beladen wird und das Stromangebot an ein Stromnetz durch das Kraftwerk (10) durch Beladen des wenigstens einen thermischen Speichers (T1, T2, T3) auf den in dem Zeitintervall anliegenden Strombedarf verringert wird, so dass die Strombereitstellung durch regenerative Energien an das Stromnetz vorrangig ist.

11. Verfahren nach Anspruch 10, bei dem das Kraftwerk (10) in konstantem Volllastbetrieb läuft.

12. Verfahren nach einem der Ansprüche 10 oder 11, bei dem als thermischer Energiespeicher (T1, T2) ein Wärmespeicher verwendet wird, der über ein Fernwärmenetz (30) entladen wird, insbesondere in einem Zeitintervall, in dem kein Stromüberangebot vom Kraftwerk (10) vorliegt.

13. Verfahren nach einem der vorstehen Ansprüche 10 oder 11 bei dem als thermischer Energiespeicher (T, T3) ein Kältespeicher verwendet wird, der über ein Fernkältenetz (50) entladen wird, insbesondere in einem Zeitintervall, in dem kein Stromüberangebot vom Kraftwerk (10) vorliegt.

14. Verfahren nach einem der vorstehen Ansprüche 10 bis 13 bei dem wenigstens ein Wärmespeicher (T1, T2) mittels einer Wärmepumpe (20) und wenigstens ein Kältespeicher (T, T3) mittels einer Kältemaschine (40) beladen wird.

## Claims

1. Arrangement comprising a power plant (10), at least one thermal energy store (T1, T2, T3), and at least one energy conversion device (20, 40) which is configured so as to load the at least one thermal energy store (T1, T2, T3) during a period of excess power supply, **characterized in that** a first (T1) of the at least one thermal store(s) (T1, T2, T3) is thermally coupled to a condenser (15) of the power plant (10).

2. Arrangement according to Claim 1 with an adjusting device for the provision of power to a power grid, wherein the adjusting device is configured so as to reduce the supply of power by the power plant (10) by charging the thermal energy store (T1, T2, T3) to the power demand that applies during this period so that the provision of power from renewable sources of energy to the power grid is prioritized.

3. Arrangement according to Claim 1 or 2, wherein the power plant (10) is designed for constant full-load operation.

4. Arrangement according to one of Claims 1 to 3, wherein at least one of the at least one thermal energy store (s) is a heat store (T1, T2), and at least one energy conversion device is a heat pump (20), and wherein the arrangement is configured to discharge the heat store (T1, T2) via a district heating grid (30).

5. Arrangement according to one of Claims 1 to 3, wherein at least one of the at least one thermal energy store (s) is a cold store (T, T3), and at least one energy conversion device is a refrigerating machine (40), wherein the arrangement is configured to discharge the cold store (T, T3) via a district cooling grid (50).

6. Arrangement according to Claim 1, wherein the first thermal store (T1) is moreover thermally coupled to an evaporator (22) of a heat pump (20) and/or to a condenser (45) of a refrigerating machine (40).

7. Arrangement according to Claim 1, wherein at least one energy conversion device is a heat pump (20) and wherein a second of the at least one thermal store (s) (T2) is thermally coupled to a condenser (25) of the heat pump (20).

8. Arrangement according to Claim 1, wherein at least one energy conversion device is a refrigerating machine (40), and wherein a third of the at least one thermal store(s) (T3) is thermally coupled to an evaporator (42) of the refrigerating machine (40).

9. Arrangement according to one of the preceding claims, wherein a generator (11) of the power plant (10) and a compressor (21, 41) of at least one energy conversion device (20, 40) are coupled to the same shaft (W).

10. Method for the adjustable provision of power by a power plant (10), in which at least one thermal store (T1) which is thermally coupled to a condenser (15) of the power plant (10) is charged by means of an energy conversion device (20, 40) during a period of excess power supply, and the power supply to a power grid by the power plant (10) is reduced by charging the at least one thermal store (T1, T2, T3) to the power demand applied during the period, so that the provision of power to the power grid from renewable sources of energy is prioritized.

11. Method according to Claim 10, in which the power plant (10) runs at constant full-load operation.

12. Method according to either Claim 10 or 11, in which a heat store is used as a thermal energy store (T1, T2) which is discharged via a district heating grid (30), in particular during a period in which there is no excess power supply from the power plant (10).

13. Method according to one of the preceding Claims 10 or 11, in which a cold store is used as a thermal energy store (T, T3) which is discharged via a district cooling grid (50), in particular during a period in which there is no excess power supply from the power plant (10).

14. Method according to one of the preceding Claims 10 to 13, in which at least one heat store (T1, T2) is charged by means of a heat pump (20), and at least one cold store (T, T3) is charged by means of a refrigerating machine (40).

## Revendications

1. Agencement comprenant une centrale (10) électrique, au moins un accumulateur (T1, T2, T3) d'énergie thermique et au moins un dispositif (20, 40) de transformation d'énergie, conformé pour charger au moins un accumulateur (T1, T2, T3) d'énergie thermique dans l'intervalle de temps d'une surproduction de courant,
**caractérisé en ce qu'**
un premier (T1) des au moins un accumulateur (T1, T2, T3) thermique est couplé thermiquement à un condenseur (15) de la centrale (10) électrique.

2. Agencement suivant la revendication 1, comprenant un dispositif de réglage pour la mise à disposition de courant à un réseau de courant, le dispositif de réglage étant conformé pour diminuer la production de courant par la centrale (10) électrique, par le chargement de l'accumulateur (T1, T2, T3) d'énergie thermique, au besoin de courant s'appliquant dans cet intervalle de temps, de manière à ce que la mise à disposition de courant par des énergies régénératives sur le réseau de courant soit prioritaire.

3. Agencement suivant la revendication 1 ou 2, dans lequel la centrale (10) électrique est conçue pour un fonctionnement à pleine charge constant.

4. Agencement suivant l'une des revendications 1 à 3, dans lequel au moins l'un des au moins un accumulateur d'énergie thermique est un accumulateur (T1, T2) de chaleur et au moins un dispositif de transformation d'énergie est une pompe (20) à chaleur et dans lequel l'agencement est conformé pour décharger l'accumulateur (T1, T2) de chaleur par un réseau (30) de chaleur à grande distance.

5. Agencement suivant l'une des revendications 1 à 3, dans lequel au moins l'un des au moins un accumulateur d'énergie thermique est un accumulateur (T, T3) de froid et au moins un dispositif de transformation d'énergie est une machine (40) frigorifique et dans lequel l'agencement est conformée, pour décharger l'accumulateur (T, T3) de froid par un réseau (50) frigorifique à distance.

6. Agencement suivant la revendication 1, dans lequel le premier accumulateur (T1) thermique est couplé en outre thermiquement à un évaporateur (22) d'une pompe (20) à chaleur et/ou à condenseur (45) d'une machine (40) frigorifique.

7. Agencement suivant la revendication 1, dans lequel au moins un dispositif de transformation d'énergie est une pompe (20) à chaleur et dans lequel un deuxième des au moins un accumulateur (T2) thermique est couplé thermiquement à un condenseur (25) de la pompe (20) à chaleur.

8. Agencement suivant la revendication 1, dans lequel au moins un dispositif de transformation d'énergie est une machine (40) frigorifique et dans lequel un troisième des au moins un accumulateur (T3) thermique est couplé thermiquement à un évaporateur (42) de la machine (40) frigorifique.

9. Agencement suivant l'une des revendications précédentes, dans lequel une génératrice (11) de la centrale (10) électrique et un compresseur (21, 41), d'au moins un dispositif (20, 40) de transformation d'énergie, sont montés sur le même arbre (W).

10. Procédé de mise à disposition réglable de courant par une centrale (10) électrique, dans lequel on charge au moins un accumulateur (T1) thermique, qui est couplé thermiquement à un condenseur (15) de la centrale (10) électrique, au moyen d'un dispositif (20, 40) de transformation d'énergie, dans un intervalle de temps d'une surproduction de courant et on diminue la production de courant sur le réseau de courant par la centrale (10) électrique, en chargeant le au moins un accumulateur (T1, T2, T3) thermique jusqu'au besoin de courant s'appliquant dans l'intervalle de temps, de manière à ce que la mise à disposition du courant par des énergies régénératives sur le réseau de courant soit prioritaire.

11. Procédé suivant la revendication 10, dans lequel la centrale (10) fonctionne en fonctionnement à pleine charge constant.

12. Procédé suivant l'une des revendications 10 ou 11, dans lequel on utilise, comme accumulateur (T1, T2) d'énergie thermique, un accumulateur de chaleur que l'on décharge par un réseau (30) de chaleur à distance, notamment dans un intervalle de temps dans lequel il n'y a pas de surproduction de courant par la centrale (10) électrique.

13. Procédé suivant l'une des revendications précédentes 10 ou 11, dans lequel on utilise, comme accumulateur (T, T3) d'énergie thermique, un accumulateur de froid que l'on décharge par un réseau (50) frigorifique à distance, notamment dans un intervalle de temps dans lequel il n'y a pas de surproduction de courant par la centrale (10) électrique.

14. Procédé suivant l'une des revendications précédentes 10 à 13, dans lequel on charge au moins un accumulateur (T1, T2) de chaleur au moyen d'une pompe (20) à chaleur et au moins un accumulateur (T, T3) de froid au moyen d'une machine (40) frigorifique.
